# FASCICULE DE BREVET EUROPEEN

(11) **EP 3 074 596 B1**
(45) Date de publication et mention de la délivrance du brevet: **13.11.2019**
(21) Numéro de dépôt: 14814947.9
(22) Date de dépôt: 24.11.2014
(51) Int. Cl.: F01D 5/02, F16F 15/32, G01M 1/36, F01D 25/04, F16F 15/34, F02C 7/04, F01D 9/02

(54) **PARTIE DE TURBOMACHINE ÉQUILIBRÉE ET PROCÉDÉ ASSOCIÉ**
AUSGEWUCHTETES GASTURBINENMOTORTEIL UND ZUGEHÖRIGES VERFAHREN
BALANCED TURBINE ENGINE PORTION AND CORRESPONDING METHOD

(30) Priorité: 26.11.2013 FR 1361640
(43) Date de publication de la demande: 05.10.2016
(73) Titulaire: Safran Aircraft Engines, 75015 Paris (FR)
(72) Inventeur: LE STRAT, Jean-Luc, F-77550 Moissy-Cramayel Cedex (FR); POHIER, Hervé, F-77550 Moissy-Cramayel Cedex (FR)
(74) Mandataire: Brevalex
(86) Numéro de dépôt international: PCT/FR2014/053011
(87) Numéro de publication internationale: WO 2015/079150

(56) Documents cités:
- EP-A2- 1 441 108
- EP-A2- 2 028 375
- FR-A1- 2 980 240
- US-A1- 2011 223 008
- US-A1- 2012 151 937

## Description

### DOMAINE TECHNIQUE

L'invention se rapporte au domaine des turbomachines et de l'équilibrage de certaines parties de turbomachine.

### ÉTAT DE LA TECHNIQUE ANTÉRIEURE

Les turbomachines comportent, par définition, des pièces rotatives à des vitesses relativement élevées. Ces vitesses de rotation élevées peuvent occasionnées des vibrations importantes de certaines parties de turbomachine, ces vibrations pouvant, à court ou moyen terme, endommager lesdites parties. Il est donc nécessaire, afin de limiter l'amplitude de ces vibrations, d'équilibrer lesdites parties.

Ainsi, il est connu de prévoir sur ces parties de turbomachine à équilibrer la fixation de masses d'équilibrage dont la répartition est adaptée pour équilibrer lesdites parties.

Pour fournir une telle fixation, la partie de turbomachine à équilibrer comporte une rainure de sertissage adaptée pour recevoir des écrous et les écrous pouvant être sertis dans cette rainure. Les masses d'équilibrage prennent la forme de vis d'équilibrage dont la masse est adaptée en modifiant la longueur.

Lors de l'équilibrage d'une telle partie de turbomachine, les écrous sont tout d'abord sertis un par un dans la rainure de sertissage avec une distribution angulaire prédéterminée. Les vis sont ensuite montées sur les différents écrous, la masse de chacune des vis étant adéquatement choisie pour équilibrer ladite partie.

Si un tel système de répartition écrous-vis d'équilibrage dans une rainure de sertissage permet un équilibrage précis de la partie de turbomachine à équilibrer, il présente néanmoins un certain nombre d'inconvénients. En effet, l'étape de sertissage des écrous se doit d'être précise et nécessite un outillage adapté. Il en résulte que cette étape est fastidieuse à mettre en œuvre, comporte des risques importants d'endommagement de la pièce à équilibrer et présente une influence non négligeable sur la durée de fabrication d'une turbomachine. Ce même système n'est pas non plus particulièrement adapté pour les opérations de maintenance. En effet, toute opération de réparation ou de changement d'un écrou nécessite que la partie de turbomachine entière soit déplacée dans un atelier adapté.

Cette problématique s'applique en particulier sur la partie de turbomachine qui est le cône d'entrée de la turbomachine. En effet, cette partie est réalisée en aluminium et présente donc un risque important d'endommagement lors du sertissage et du démontage des écrous pour la fixation des vis d'équilibrage. EP 2 028 375 A2 divulgue une soufflante pour turbomachine d'aéronef de l'art antérieur comprenant une bride d'équilibrage masquée par le cône d'entrée.

### EXPOSÉ DE L'INVENTION

L'invention vise à remédier à ces inconvénients.

Ainsi, l'un des buts de l'invention est de fournir une partie de turbomachine équilibrée avec un système de fixation de masses d'équilibrage comportant des éléments de fixation, tels qu'écrous, ceci sans que l'équilibrage est nécessité une étape lourde de sertissage de ces éléments de fixation soit nécessaire.

Un autre but de l'invention est de fournir une partie de turbomachine à équilibrée avec un système de fixation de masses d'équilibrage comportant des éléments de fixation, tels que des écrous, ledit système ayant permis un positionnement des éléments de fixation vis-à-vis de la partie de turbomachine qui était facilité.

A cet effet l'invention concerne une partie de turbomachine équilibrée, selon la revendication 1, comportant :
- au moins un secteur angulaire agencé pour former une couronne d'équilibrage centrée autour d'un axe de couronne, ledit secteur angulaire comportant une pluralité d'éléments de fixation chacun adapté pour fixer au moins une masse d'équilibrage respective, lesdits éléments de fixation comportant chacun un axe de filetage, l'ensemble des axes de filetage convergeant sensiblement en un même point sur l'axe de couronne,
- une face d'appui de forme complémentaire à la couronne d'équilibrage, le secteur angulaire étant en appui sur ladite face d'appui,
- une pluralité de masses d'équilibrage chacune fixée sur l'élément de fixation correspondant du secteur angulaire, dans laquelle au moins l'une desdites masses d'équilibrage fait également offices de moyen de fixation pour fixer le secteur angulaire sur la face d'appui.

Un tel secteur angulaire de couronne d'équilibrage permet de positionner en une seule fois la pluralité des éléments de fixation de ce secteur angulaire. Cela évite ainsi au technicien la fastidieuse tâche de devoir positionner ces mêmes éléments de fixation individuellement. Ceci est d'autant plus vrai que, pour une couronne d'équilibrage formée de plusieurs secteurs angulaires, seul le positionnement précis du premier secteur est nécessaire, la précision de positionnement des autres secteurs angulaire s'obtenant par le placement de ces derniers par rapport au premier secteur angulaire.

De plus, une turbomachine étant de révolution, la forme de couronne permet la mise et le maintien en place aisés des secteurs angulaires. Il n'est donc pas nécessaire de passer par une opération lourde de sertissage comme cela est le cas dans les procédés d'équilibrage de l'art antérieur. Cette mise en place et ce maintien sans sertissage limite les risque d'endommagement de la partie de turbomachine lors de son équilibrage. Les opérations de maintenance de cette même partie de turbomachine sont également facilitées puisqu'il n'est pas nécessaire de dessertir les éléments de fixation un par un.

L'angle du secteur angulaire peut être compris entre 20° et 360°.

L'axe de filetage de chacun des éléments de fixation peut former un angle maximum vis-à-vis de la direction radiale du secteur angulaire inférieur à 50°, préférentiellement inférieur à 30° et encore plus préférentiellement à 15°.

L'axe de filetage de chacun des éléments de fixation peut être orienté sensiblement radialement par rapport au secteur angulaire.

Le secteur angulaire peut être destiné à la formation d'une couronne d'équilibrage présentant une forme de révolution tronconique ou cylindrique.

Les éléments de fixation peuvent être distribués sensiblement régulièrement le long du secteur angulaire.

La partie de turbomachine peut être un cône d'entrée de turbomachine.

Une telle partie de turbomachine, notamment de par le fait qu'elle peut être réalisée en aluminium et peut donc présenter des risques important d'endommagement lors de son équilibrage selon un procédé de l'art antérieur, bénéficie particulièrement d'une telle configuration.

L'invention concerne en outre un procédé d'équilibrage d'une partie de turbomachine, selon la revendication 8, comportant une face d'appui, ledit procédé comprenant les étapes suivantes :
- fournir au moins un secteur angulaire selon l'invention,
- mettre en appui le secteur angulaire sur la face d'appui de la partie de turbomachine à équilibrer ceci de manière à former la couronne d'équilibrage,
- fixer au moins une masse d'équilibrage sur l'un des éléments de fixation du secteur angulaire de manière à fixer le secteur angulaire et à équilibrer ladite partie de turbomachine.

Un tel procédé d'équilibrage permet de fournir une partie de turbomachine équilibrée qui autorise des opérations de maintenance facilitées par rapport à une partie de turbomachine équilibrée selon un procédé de l'art antérieur

L'invention concerne également une turbomachine comportant au moins une partie de turbomachine équilibrée selon l'invention.

Une telle turbomachine autorise des opérations de maintenance facilitées concernant la partie de turbomachine équilibrée vis-à-vis d'une turbomachine comportant une partie de turbomachine équilibrée selon un procédé de l'art antérieur.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- la figure 1 illustre un cône d'entrée d'une turbomachine qui est équipé de secteurs angulaires d'une couronne d'équilibrage selon l'invention,
- les figures 2a et 2b illustres respectivement une couronne d'équilibrage tel qu'illustré sur la figure 1 et un secteur angulaire formant une telle couronne d'équilibrage,
- la figure 3 illustre une vue rapprochée du cône d'entrée illustré sur la figure 1 permettant de montrer la fixation de la couronne au moyen d'une vis d'équilibrage,
- la figure 4 illustre une section du cône illustré sur la figure 1

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

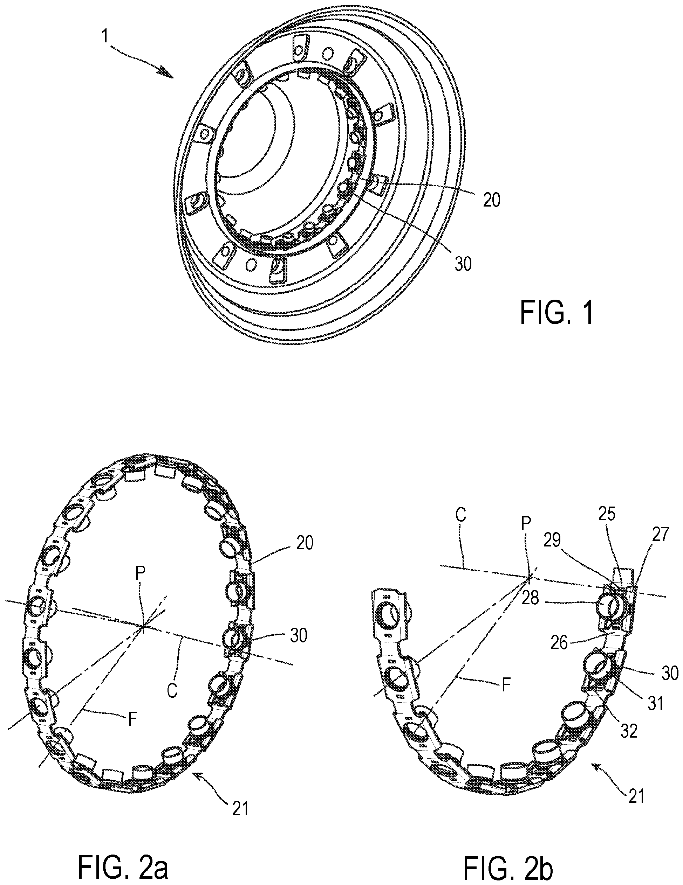

La figure 1 illustre un cône d'entrée 1 de turbomachine équipée d'une couronne d'équilibrage 20 comportant une pluralité d'écrous 30 pour la fixation de vis d'équilibrage 40 correspondantes, non illustrées sur la figure 1.

Une telle couronne d'équilibrage 20 se présente comme illustré sur la figure 2a, sous la forme d'une bande dont les deux extrémités sont jointes pour présenter une section transversale sensiblement circulaire. La couronne d'équilibrage 20 présente ainsi une forme sensiblement cylindrique de révolution dont la hauteur est du même ordre de grandeur que la largeur d'un écrou 30. Selon d'autres possibilités de l'invention, non illustrées, la couronne d'équilibrage 20 peut présenter une forme de révolution autre que cylindrique, telle qu'une forme tronconique. La couronne d'équilibrage 20 est centrée autour d'un axe de couronne (C).

La couronne d'équilibrage 20, comme illustrée sur la figure 2b, peut être formée à partir d'un ou plusieurs secteurs angulaires 21 d'angle compris entre 20° et 360°. Selon une configuration préférée et illustrée sur la figure 2b, la couronne d'équilibrage 20 est préférentiellement formée de deux secteurs angulaires 21 d'angle égal à 180°.

Selon une première possibilité, les secteurs angulaires 21 sont dépourvus de système de montage pour les assembler entre eux, et sont donc adaptés pour former la couronne d'équilibrage 20 par un simple montage côte à côte lors de l'installation sur le cône d'entrée 1. Selon une deuxième possibilité, les secteurs angulaires 21 comportent chacun au moins un moyen de fixation adapté pour coopérer avec un moyen de fixation complémentaire d'un secteur angulaire directement adjacent. Selon cette deuxième possibilité, l'assemblage des secteurs angulaire 21 pour former la couronne d'équilibrage 20 peut avoir lieu préalablement à l'installation sur le cône d'entrée 1 ou en même temps que l'assemblage sur le cône d'entrée 1. Le procédé d'équilibrage qui est décrit ci-après est adapté pour la première possibilité dans laquelle les secteurs angulaires 21 ne comportent pas de système de montage pour les assembler entre eux, et donc dans lequel la couronne d'équilibrage 20 est formée par un simple montage côte à côte des secteurs angulaires 21.

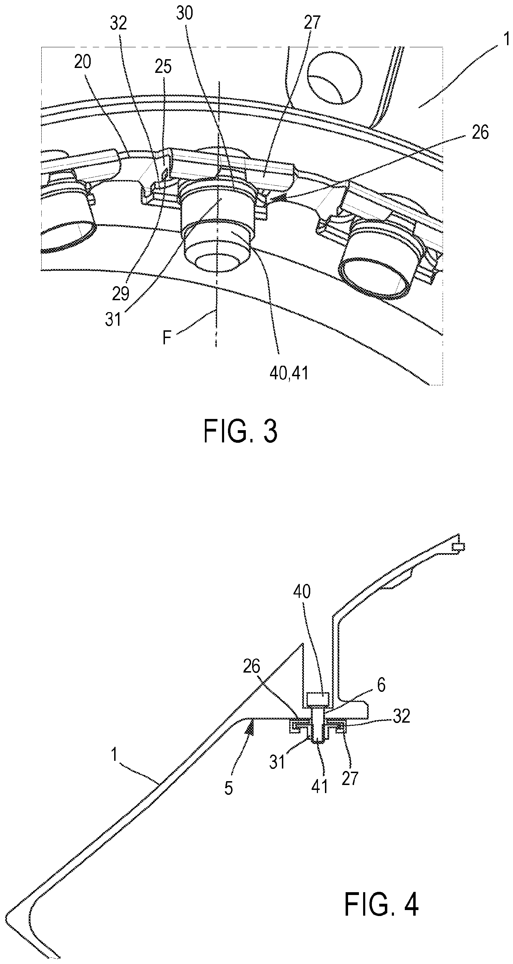

La couronne d'équilibrage 20 comporte, le long de son périmètre et comme montré sur la figure 3, une pluralité d'emplacements 25 d'écrou. Les emplacements 25 d'écrou sont distribués sensiblement régulièrement le long de la couronne d'équilibrage 20.

Chacun des emplacements 25 d'écrou comporte un orifice de passage 28, adapté pour le passage de la tige d'une vis d'équilibrage 40, et un système de montage d'un écrou 30 adapté pour monter l'écrou 30 en le bloquant en rotation.

Le système de montage comporte une portion 26 de couronne d'équilibrage 20 formant un support d'écrou. Cette portion 26 se présente sous la forme d'un évasement latéral de la couronne d'équilibrage 20 de manière à que la couronne d'équilibrage 20 comporte, au niveau de cette portion 26, une largeur supérieure à celle d'un écrou 30. La couronne d'équilibrage 20 est ainsi adaptée pour supporter un écrou 30 à chaque emplacement 25 d'écrou formé sur une portion 26. Chaque portion 26 présente deux extensions latérales 27 s'entendant à partir de la portion 26 radialement vers l'intérieur de la couronne d'équilibrage 20 puis en direction l'une de l'autre. Ces extensions latérales 27, présentent ainsi des sections latérales en forme de L qui permettent de supporter l'écrou 30 lorsqu'il est mis en place sur la portion 26 de couronne d'équilibrage 20 correspondante.

Le système de montage comporte également deux excroissances 29, adaptées pour former butées, s'étendant toutes deux de part et d'autre de la portion 25 correspondante en direction de l'intérieur de la couronne d'équilibrage 20. Les excroissances 29 peuvent consister par exemple en des languettes formées par des découpes pratiquées dans la couronne d'équilibrage 20, que l'on courbe par poinçonnage pour former les excroissances 29 une fois que l'écrou 30 est mis en place.

Ainsi, une fois qu'un écrou 30 est disposé dans l'emplacement correspondant de la couronne, il est maintenu en place par le système de montage avec les deux extensions latérales 27 qui le bloquent en rotation et les deux excroissances 29 qui le maintiennent en place dans la direction périphérique de la couronne d'équilibrage 20. Avantageusement, au moins une excroissance 29 peut être rétractable, par exemple en aplatissant la languette qui la forme. Cela permet de débloquer le maintien en place de l'écrou 30 correspondant, et permet de déplacer l'écrou dans la direction périphérique pour le désengager des extensions latérales 27 et le sortir de la couronne d'équilibrage 20. Ainsi, de tels systèmes de montage permettent un montage amovible des écrous 30 sur la couronne d'équilibrage 20 tout en offrant un maintien répondant aux contraintes sécuritaires liées à l'installation sur une turbomachine.

Chacun des écrous 30, comme illustré sur la figure 3, comporte une platine 32 adaptée pour coopérer avec le système de montage et comportant une ouverture traversante destinée au passage de la tige 41 d'une vis d'équilibrage 40. L'ouverture est disposée sur la platine 32 de manière à ce qu'elle corresponde à l'orifice de passage 28 de l'emplacement 25 lorsque l'écrou 30 est monté sur un emplacement de la couronne d'équilibrage 20. La platine 32 comporte une première face qui est en appui sur la portion de couronne lorsque l'écrou est positionné sur un système de montage, et une deuxième face ayant des bords latéraux aptes à prendre appui sur les sections latérales en forme de L des extensions latérales 27.

L'ouverture traversante d'une platine 32 est prolongée par un manchon 31 qui s'étend sensiblement perpendiculairement à partir de la platine 32 à partir de sa deuxième face. Le manchon 31 est un manchon creux et fileté de forme cylindrique de révolution. L'axe de filetage F du manchon 31, correspondant donc à l'axe de filetage F de l'écrou, est orienté sensiblement perpendiculairement au plan selon lequel s'étend la platine 32.

Ainsi, avec une telle configuration de l'écrou 30, quand ce dernier est monté sur un emplacement de la couronne d'équilibrage 20, l'axe de filetage F de l'écrou 30 se retrouve orienté radialement par rapport à la couronne d'équilibrage. Lorsque l'ensemble des emplacements 25 sont occupés par des écrous 30, comme cela est illustré sur la figure 2a, les axes de filetage F des écrous 30 convergent sur l'axe de couronne C de la couronne d'équilibrage 20 en un même point P.

Chacun des écrous 30 forme un élément de fixation fileté adapté pour fixer une vis d'équilibrage 40, c'est-à-dire une masse d'équilibrage.

Le cône d'entrée 1 de turbomachine forme une partie de la turbomachine qui est à équilibrer. Afin de permettre un équilibrage au moyen d'une couronne d'équilibrage 20, le cône d'entrée 1 comporte, comme montré sur la section illustrée par la figure 4, une face d'appui 5 interne. La face d'appui 5 présente une forme complémentaire à la couronne d'équilibrage 20. Le cône d'entrée 1 comporte également, au niveau de cette face d'appui 5, une pluralité de percées 6 mettant en communication l'extérieur du cône d'entrée 1 avec la face d'appui 5. Le nombre de ces percées 6 et leur disposition le long de la face d'appui 5 sont adaptés pour correspondre à celui des orifices de passage de la couronne 20.

L'équilibrage d'un tel cône d'entrée 1 peut être réalisé au moyen d'un procédé d'équilibrage comportant les étapes suivantes :
- mise en place d'un premier secteur angulaire 21 en appui sur la face d'appui 5 du cône d'entrée 1, les orifices de passage 28 étant positionnés chacun en regard d'une percée 6 de la face d'appui 5 du cône d'entrée 1,
- installation d'au moins une vis d'équilibrage 40 afin de définir le positionnement de ce premier secteur angulaire 21, la tige 41 de ladite vis d'équilibrage 40 étant passée au travers de la percée 6 et étant vissé dans un écrou 30 correspondant dudit secteur angulaire 21,
- positionnement de l'autre secteur angulaire par rapport au premier secteur angulaire 21 sur la face d'appui 5 du cône d'entrée 1,
- installation d'au moins une deuxième vis d'équilibrage 40, de manière à fixer le deuxième secteur angulaire,
- installation des autres vis d'équilibrage 40, la masse de ces autres vis d'équilibrage 40 étant choisie de manière à équilibrer le cône d'entrée 1.

Le procédé décrit ci-dessus concerne une couronne d'équilibrage 20 qui est formée de deux secteurs angulaires assemblés lors de leur positionnement sur le cône d'entrée. Bien entendu, les étapes d'un tel procédé sont parfaitement adaptables pour une couronne d'équilibrage comportant un unique secteur angulaire ou qui est formée de secteurs angulaires assemblés préalablement à l'installation sur le cône d'entrée. Un tel procédé adapté comporte ainsi une étape préalable de fourniture de la couronne d'équilibrage 20, soit directement par un secteur angulaire de 360°, soit par l'assemblage des secteurs angulaires 21 entre eux pour former la couronne d'équilibrage 20. Dans ce même procédé l'étape de mise en place du secteur angulaire est substituée par une étape de mise en place de la couronne d'équilibrage 20 et les étapes de positionnement de l'autre secteur et d'installation de la deuxième vis d'équilibrage ne sont pas effectuées, car plus nécessaires.

Dans le procédé d'équilibrage d'écrit ci-dessus, la couronne d'équilibrage 20 comporte deux secteurs angulaires de 180°, elle néanmoins comporter un nombre différent de secteurs angulaires sans que l'on sorte du cadre de l'invention. Ainsi, par exemple, la couronne d'équilibrage peut comporter un unique secteur angulaire de 360°, quatre secteurs angulaires de 90° chacun, ou encore 3 secteurs angulaires, deux étant de 90° et un étant de 180°.

Dans le mode de réalisation décrit ci-dessus, les écrous sont fixés à la couronne d'équilibrage. Selon cette possibilité, le changement d'un écrou nécessite de le retirer de la couronne d'équilibrage en entier, ou le cas échéant, le secteur angulaire le comportant. Il est néanmoins envisageable, ceci sans que l'on sorte du cadre de l'invention qu'une partie ou l'ensemble des écrous soient montées amovibles sur la couronne, par exemple en prévoyant des moyens pour encliqueter de façon amovible la platine de l'écrou sur la couronne.

## Revendications

1. Partie de turbomachine équilibrée comportant :
- au moins un secteur angulaire (21) agencé pour former une couronne d'équilibrage (20) centrée autour d'un axe de couronne (C), ledit secteur angulaire (21) comportant une pluralité d'éléments de fixation (30) chacun adapté pour fixer au moins une masse d'équilibrage (40) respective, lesdits éléments de fixation comportant chacun un axe de filetage (F), l'ensemble des axes de filetage (F) convergeant sensiblement en un même point (P) sur l'axe de couronne (C),
- une face d'appui (5) de forme complémentaire à la couronne d'équilibrage (20), le secteur angulaire (21) étant en appui sur ladite face d'appui (5),
- une pluralité de masses (40) d'équilibrage chacune fixée sur l'élément de fixation (30) correspondant du secteur angulaire (21), **caractérisé en ce qu'**au moins l'une desdites masses d'équilibrage fait également offices de moyen de fixation pour fixer le secteur angulaire (21) sur la face d'appui (5).

2. Partie de turbomachine équilibrée selon la revendication 1, dans laquelle l'angle du secteur angulaire (21) est compris entre 20° et 360°.

3. Partie de turbomachine équilibrée selon la revendication 1 ou 2, dans laquelle l'axe de filetage de chacun des éléments de fixation est orienté sensiblement radialement par rapport au secteur angulaire (21).

4. Partie de turbomachine équilibrée selon l'une quelconque des revendications 1 à 3, dans lequel chaque élément de fixation est maintenu en place par des extensions latérales (27) serties par pliage.

5. Partie de turbomachine équilibrée selon l'une quelconque des revendications 1 à 4, dans laquelle la couronne d'équilibrage présente une forme de révolution cylindrique ou tronconique.

6. Partie de turbomachine équilibrée selon l'une quelconque des revendications 1 à 5, dans laquelle les éléments de fixation sont distribués sensiblement régulièrement le long du secteur angulaire.

7. Partie de turbomachine équilibrée selon l'une quelconque des revendications 1 à 6, dans laquelle la partie de turbomachine est un cône d'entrée de turbomachine.

8. Procédé d'équilibrage d'une partie de turbomachine comportant une face d'appui, ledit procédé comprenant les étapes suivantes :
- fournir au moins un secteur angulaire (21) destiné à la formation d'une couronne d'équilibrage (20) centrée autour d'un axe de couronne (C), ledit secteur angulaire (21) comportant une pluralité d'éléments de fixation (30) chacun adapté pour fixer au moins une masse d'équilibrage (40) respective, lesdits éléments de fixation comportant chacun un axe de filetage (F), l'ensemble des axes de filetage (F) convergeant sensiblement en un même point (P) sur l'axe de couronne (C),
- mettre en appui le secteur angulaire (21) sur la face d'appui (5) de la partie de turbomachine à équilibrer ceci de manière à former une couronne d'équilibrage (20),
- fixer au moins une masse d'équilibrage sur l'un des éléments de fixation du secteur angulaire (21) de manière à fixer le secteur angulaire (21) sur la face d'appui (5) et à équilibrer ladite partie de turbomachine.

9. Turbomachine **caractérisée en ce qu'**elle comporte au moins une partie de turbomachine équilibrée selon l'une quelconque des revendications 1 à 7.

## Patentansprüche

1. Ausgewuchtetes Turbotriebwerks-Teil, welches aufweist:
- mindestens einen Winkelsektor (21), der ausgeführt ist, um einen Ausgleichskranz (20) zu bilden, der um eine Kranzachse (C) zentriert ist, wobei dieser Winkelsektor (21) eine Vielzahl von Befestigungselementen (30) enthält, von denen jedes geeignet ist, mindestens eine jeweilige Wuchtmasse (40) zu befestigen, wobei die genannten Befestigungselemente jeweils eine Gewindeachse (F) aufweisen, wobei sämtliche Gewindeachsen (F) im Wesentlichen an einem gleichen Punkt (P) auf der Kranzachse (C) zusammenlaufen,
- eine Auflagefläche (5) mit zu dem Ausgleichskranz (20) komplementärer Form, wobei der Winkelsektor (21) auf der genannten Auflagefläche (5) aufliegt,
- eine Vielzahl von Wuchtmassen (40), die jeweils an dem entsprechenden Befestigungselement (30) des Winkelsektors (21) befestigt sind,
**dadurch gekennzeichnet,**
**dass** mindestens eine der genannten Wuchtmassen auch als Befestigungsmittel dient, um den Winkelsektor (21) auf der Auflagefläche (5) zu befestigen.

2. Ausgewuchtetes Turbotriebwerks-Teil nach Anspruch 1, bei dem der Winkel des Winkelsektors (21) zwischen 20° und 360° beträgt.

3. Ausgewuchtetes Turbotriebwerks-Teil nach Anspruch 1 oder 2, bei dem die Gewindeachse jedes der Befestigungselemente im Wesentlichen radial bezogen auf den Winkelsektor (21) ausgerichtet ist.

4. Ausgewuchtetes Turbotriebwerks-Teil nach einem der Ansprüche 1 bis 3, bei dem jedes Befestigungselement durch seitliche Erweiterungen (27), die durch Umbiegen angepresst werden, an seinem Platz gehalten wird.

5. Ausgewuchtetes Turbotriebwerks-Teil nach einem der Ansprüche 1 bis 4, bei dem der Ausgleichskranz eine zylindrische oder kegelstumpfförmige umlaufende Form aufweist.

6. Ausgewuchtetes Turbotriebwerks-Teil nach einem der Ansprüche 1 bis 5, bei dem die Befestigungselemente im Wesentlichen in regelmäßigen Abständen auf dem Winkelsektor verteilt angeordnet sind.

7. Ausgewuchtetes Turbotriebwerks-Teil nach einem der Ansprüche 1 bis 6, wobei dieses Turbotriebwerks-Teil ein Eintrittskonus eines Turbotriebwerks ist.

8. Verfahren zum Auswuchten eines Turbotriebwerks-Teils mit einer Auflagefläche, welches die folgenden Verfahrensschritte umfasst:
- Bereitstellen mindestens eines Winkelsektors (21), der dazu bestimmt ist, einen Ausgleichskranz (20) zu bilden, der um eine Kranzachse (C) zentriert ist, wobei dieser Winkelsektor (21) eine Vielzahl von Befestigungselementen (30) enthält, von denen jedes geeignet ist, mindestens eine jeweilige Wuchtmasse (40) zu befestigen, wobei die genannten Befestigungselemente jeweils eine Gewindeachse (F) aufweisen, wobei sämtliche Gewindeachsen (F) im Wesentlichen an einem gleichen Punkt (P) auf der Kranzachse (C) zusammenlaufen,
- den Winkelsektor (21) auf der Auflagefläche (5) des auszuwuchtenden Turbotriebwerks-Teils dergestalt in Auflage bringen, dass ein Ausgleichskranz (20) gebildet wird,
- Befestigen von mindestens einer Wuchtmasse an einem der Befestigungselemente des Winkelsektors (21) dergestalt, dass der Winkelsektor (21) auf der Auflagefläche (5) befestigt wird, und dass das genannte Turbotriebwerks-Teil ausgewuchtet wird.

9. Turbotriebwerk,
**dadurch gekennzeichnet,**
**dass** es mindestens ein ausgewuchtetes Turbotriebwerks-Teil nach einem der Ansprüche 1 bis 7 aufweist.

## Claims

1. A balanced turbomachine that including:
- at least one angular sector (21) arranged to form a balancing ring (20) centered about a ring axis (C), said angular sector (21) including a plurality of fasteners (30) each adapted to fasten at least one respective balancing mass (40), said fasteners each including a threading axis (F), all the threading axes (F) substantially converging at a same point (P) on the ring axis (C),
- a bearing face (5) having a shape complementary to the balancing ring (20), the angular sector (21) bearing on said bearing face (5),
- a plurality of balancing masses (40) each fastened to the corresponding fastener (30) of the angular sector (21), **characterized in that** at least one of the balancing masses is also acting as an fastening means for fastening the angular sector (21) to the bearing face (5).

2. The balanced turbomachine part according to claim 1, wherein the angle of the angular sector (21) is between 20° and 360°.

3. The balanced turbomachine part according to claim 1 or 2, wherein the threading axis of each of the fasteners is substantially radially oriented with respect to the angular sector (21).

4. The balanced turbomachine part according to any of claims 1 to 3, wherein each fastener is held in place by side extensions (27) crimped by folding.

5. The balanced turbomachine part according to any of claims 1 to 4, wherein the balancing ring has a cylindrical or frustro-conical revolution shape.

6. The balanced turbomachine part according to any of claims 1 to 5, wherein the fasteners are substantially evenly distributed along the angular sector.

7. The balanced turbomachine part according to any of claims 1 to 6, wherein the turbomachine part is a turbomachine inlet cone.

8. A method for balancing a turbomachine part including a bearing face, said method comprising the following steps of:
- providing at least one angular sector (21) for forming a balancing ring (20) centered about a ring axis (C), said angular sector (21) including a plurality of fasteners (30) each adapted to fasten at least one respective balancing mass (40), said fasteners each including a threading axis (F), all the threading axes (F) substantially converging at a same point (P) on the ring axis (C),
- bringing the angular sector (21) to bear on the bearing face (5) of the turbomachine part to be balanced so as to form a balancing ring (20),
- fastening at least one balancing mass on one of the fasteners of the angular sector (21) so as to fasten the angular sector (21) on the bearing face (5) and to balance said turbomachine part.

9. A turbomachine **characterized in that** it includes at least one balanced turbomachine part according to any of claims 1 to 7.
